(19)

Europäisches
Patentamt
European
Patent Office
Office européen
des brevets

(11) **EP 4 650 979 A1**

(12) **EUROPEAN PATENT APPLICATION**

(43) Date of publication:
19.11.2025 Bulletin 2025/47

(21) Application number: 25182925.5

(22) Date of filing: 16.06.2025

(51) International Patent Classification (IPC):
*G06F 16/2458* (2019.01)    *G06F 16/3329* (2025.01)

(52) Cooperative Patent Classification (CPC):
G06F 40/30; G06F 16/2465; G06F 16/3329

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.07.2024  CN 202411046153

(71) Applicant: Beijing Baidu Netcom
Science Technology Co., Ltd.
Beijing 100085 (CN)

(72) Inventors:
• WANG, Jiaqi
  Beijing, 100085 (CN)
• PEI, Zhongyou
  Beijing, 100085 (CN)
• SHI, Peng
  Beijing, 100085 (CN)

(74) Representative: Maiwald GmbH
Elisenhof
Elisenstraße 3
80335 München (DE)

(54) **METHOD AND APPARATUS FOR INTENT RECOGNITION BASED ON A LARGE LANGUAGE MODEL (LLM), ELECTRONIC DEVICE, AND STORAGE MEDIUM**

(57)    The present disclosure provides a method and an apparatus for intent recognition based on a large language model (LLM), an electronic device, and a storage medium, relating to a field of computer technology, specifically to a field of artificial intelligence technology, such as natural language processing and an LLM. A specific implementation solution is as follows: obtaining a query statement, a preset intent, and descriptive information of the preset intent; obtaining a first candidate intent corresponding to the query statement by matching the query statement with the preset intent and the descriptive information of the preset intent; generating first prompt information based on the query statement, the first candidate intent, and descriptive information of the first candidate intent; and determining a first target intent corresponding to the query statement from the first candidate intent by inputting the first prompt information into the LLM.

FIG. 1

**Description**

**TECHNICAL FIELD**

The present disclosure relates to a field of computer technology, and in particular to a field of artificial intelligence technology, such as natural language processing and a large language model (LLM), and specifically relates to a method and an apparatus for intent recognition based on an LLM, an electronic device, and a storage medium.

**BACKGROUND**

With the continuous development of Artificial Intelligence (AI) technology, human-computer interaction (HCI) is evolving from command-based to conversational. In conversational HCI scenario (e.g., intent recognition systems, recommendation systems, public opinion analysis systems, retrieval systems, and text classification systems, etc.), it is first necessary to understand the user's intent, and then an answer that the user wants may be given based on the user's intent. Therefore, it is critical to recognize user's intent in conversational HCI scenario.

**SUMMARY**

Embodiments of the present disclosure provide a method and an apparatus for intent recognition based on a large language model (LLM), an electronic device, and a storage medium.

According to a first aspect of the present disclosure, a method for intent recognition based on an LLM is provided, including:

obtaining a query statement, a preset intent, and descriptive information of the preset intent;
obtaining a first candidate intent corresponding to the query statement by matching the query statement with the preset intent and the descriptive information of the preset intent;
generating first prompt information based on the query statement, the first candidate intent, and descriptive information of the first candidate intent; and
determining a first target intent corresponding to the query statement from the first candidate intent by inputting the first prompt information into the LLM.

According to a second aspect of the present disclosure, a method for fine-tuning based on an LLM is provided, including:

obtaining a sample dataset, in which the sample dataset includes a sample statement, a third candidate intent corresponding to the sample statement, descriptive information corresponding to the third candidate intent, and an intent label corresponding to the sample statement;
generating fourth prompt information based on the sample statement, the third candidate intent, and the descriptive information corresponding to the third candidate intent;
obtaining a target predicted intent corresponding to the sample statement by inputting the fourth prompt information into an initial LLM; and
obtaining a fine-tuned LLM by fine-tuning the initial LLM based on a difference between the target predicted intent and the intent label.

According to a third aspect of the present disclosure, an apparatus for intent recognition based on an LLM is provided, including:

an obtaining module, configured to obtain a query statement, a preset intent, and descriptive information of the preset intent;
a matching module, configured to obtain a first candidate intent corresponding to the query statement by matching the query statement with the preset intent and the descriptive information of the preset intent;
a generating module, configured to generate first prompt information based on the query statement, the first candidate intent, and descriptive information of the first candidate intent; and
a recognizing module, configured to determine a first target intent corresponding to the query statement from the first candidate intent by inputting the first prompt information into the LLM.

According to a fourth aspect of the present disclosure, an apparatus for fine-tuning based on an LLM is provided, including:

an obtaining module, configured to obtain a sample dataset, in which the sample dataset includes a sample statement, a third candidate intent corresponding to the sample statement, descriptive information corresponding to the third candidate intent, and an intent label corresponding to the sample statement;

a generating module, configured to generate fourth prompt information based on the sample statement, the third candidate intent, and the descriptive information corresponding to the third candidate intent;

a predicting module, configured to obtain a target predicted intent corresponding to the sample statement by inputting the fourth prompt information into an initial LLM; and

a fine-tuning module, configured to obtain a fine-tuned LLM by fine-tuning the initial LLM based on a difference between the target predicted intent and the intent label.

According to a fifth aspect of the present disclosure, an electronic device is provided, including:

at least one processor; and
a memory communicatively coupled to the at least one processor,
in which the memory stores instructions executable by the at least one processor, and the instructions causes the at least one processor to implement the method for intent recognition based on an LLM in the first aspect, or the method for fine-tuning based on an LLM in the second aspect.

According to a sixth aspect of the present disclosure, a non-transitory computer readable storage medium storing computer instructions is provided, in which the computer instructions are configured to cause a computer to implement the method for intent recognition based on an LLM in the first aspect, or the method for fine-tuning based on an LLM in the second aspect.

According to a seventh aspect of the present disclosure, a computer program product including computer instructions is provided, in which when the computer instructions are executed by a processor, steps of the method for intent recognition based on an LLM in the first aspect, or steps of the method for fine-tuning based on an LLM in the second aspect are implemented.

The method and an apparatus for intent recognition based on an LLM, an electronic device, and a storage medium in the present disclosure provide following beneficial effects:

in the embodiments of the present disclosure, the query statement, the preset intent, and the descriptive information of the preset intent are obtained; the first candidate intent corresponding to the query statement is obtained by matching the query statement with the preset intent and the descriptive information of the preset intent; the first prompt information is generated based on the query statement, the first candidate intent, and the descriptive information of the first candidate intent; and the first target intent corresponding to the query statement is determined from the first candidate intent by inputting the first prompt information into the LLM. Therefore, the first candidate intent corresponding to the query statement may be first determined, and then the LLM is guided to identify the first target intent corresponding to the query statement from the first candidate intent based on the first candidate intent and corresponding descriptive information, so as to first eliminate interference of an irrelevant intent, reduce difficulty for the LLM in intent recognition, and improve accuracy of intent recognition.

It may be understood that what is described in this section is not intended to identify key or important features of embodiments of the present disclosure, nor is it intended to limit the scope of the disclosure. Other features of the disclosure may be readily understood by the following specification.

## BRIEF DESCRIPTION OF THE DRAWINGS

The accompanying drawings are used for a better understanding of the disclosure and do not constitute a limitation of the disclosure.

FIG. 1 is a flowchart of a method for intent recognition based on a large language model (LLM) according to one embodiment of the present disclosure.

FIG. 2 is a flowchart of a method for intent recognition based on an LLM according to another embodiment of the present disclosure.

FIG. 3 is a flowchart of a method for intent recognition based on an LLM according to another embodiment of the present disclosure.

FIG. 4 is a flowchart of a method for intent recognition based on an LLM according to another embodiment of the present disclosure.

FIG. 5 is a flowchart of a method for fine-tuning based on an LLM according to one embodiment of the present disclosure.

FIG. 6 is a flowchart of a method for fine-tuning based on an LLM according to another embodiment of the present disclosure.

FIG. 7 is a schematic diagram of an apparatus for intent recognition based on an LLM according to one embodiment of the present disclosure.

FIG. 8 is a schematic diagram of an apparatus for fine-tuning based on an LLM according to another embodiment of the present disclosure.

FIG. 9 is a block diagram of an electronic device used to implement the embodiments of the present disclosure.

## DETAILED DESCRIPTION

Exemplary embodiments of the present disclosure are described hereinafter in conjunction with the accompanying drawings, which include various details of the embodiments of the present disclosure in order to aid in understanding, and should be considered exemplary only. Accordingly, one of ordinary skill in the art should recognize that various changes and modifications may be made to the embodiments described herein without departing from the scope and spirit of the disclosure. Similarly, descriptions of well-known features and structures are omitted from the following description for the sake of clarity and brevity.

In the technical solution of the disclosure, the acquisition, storage, application, processing, transmission, provision and disclosure of the personal information of the users are all carried out under the premise of obtaining the consent of the users and are in compliance with relevant laws and regulations, and do not violate public order and morals.

The following describes a method and an apparatus for intent recognition based on a large language model (LLM), an electronic device, and a storage medium in the embodiments of the present disclosure with reference to the accompanying drawings.

It needs to be noted that an execution entity of the method for intent recognition based on an LLM in the embodiments of the present disclosure is the apparatus for intent recognition based on an LLM. The apparatus may be implemented via software and/or hardware. The apparatus may be configured in an electronic device, including but not limited to a terminal, a server, and so on.

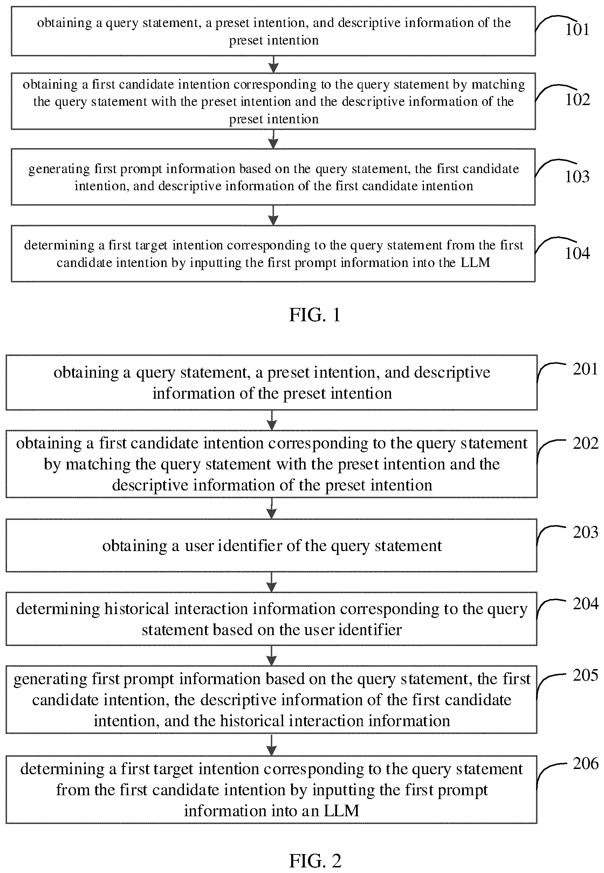

FIG. 1 is a flowchart of a method for intent recognition based on an LLM according to one embodiment of the present disclosure.

As shown in FIG. 1, the method for intent recognition based on an LLM includes S101 to S104.

At S101, a query statement, preset intents, and descriptive information of the preset intents are obtained.

The query statement may be inputted by a user, for example, the user may input the query statement in natural language. In the embodiments of the present disclosure, there is no restriction on the input method for the query statement, for example, the input method may include but is not limited to touch input (e.g., swiping, tapping), keyboard input, voice input, and so on.

The preset intents may be all possible intents that are preset, and are stored in a database. For example, the preset intents may be creative-type intents, such as drawing, creating a poem, creating a video, creating a form, and so on; or they may be document-processing-type intents, such as text translation, text explanation, and knowledge summarization, and so on; or they may be search-type intents, such as document searching, and image searching. The present disclosure does not limit this.

The descriptive information of the preset intents may include a definition of the preset intent, which is used to explain the preset intent. For example, if the preset intent is a document searching intent, the corresponding definition may be "means that the user is to perform a searching behavior, and the input may be a keyword or an expression to find relevant content".

At S102, a first candidate intent corresponding to the query statement is obtained by matching the query statement with the preset intents and the descriptive information of the preset intents.

In some embodiments, keyword matching may be performed among the query statement, the preset intent and corresponding description. A preset number of intents with the highest match may be determined as the first candidate intent.

In some embodiments, a first encoding vector corresponding to the query statement, and a second encoding vector corresponding to the preset intent and the descriptive information of the preset intent may be determined; a similarity between the first encoding vector and the second encoding vector is determined; and a first number of preset intents with a highest similarity is determined as the first candidate intent. Therefore, the first candidate intent may be determined based on the similarity between the first encoding vector corresponding to the query statement and the second encoding vector corresponding to the preset intent and the descriptive information of the preset intent, which improves accuracy of determining the first candidate intent.

In some embodiments, the first encoding vector may be obtained by encoding the query statement based on an encoder, and the second encoding vector may be obtained by jointly encoding the preset intent and the descriptive information of the preset intent based on the encoder.

The first number may be 5, 10, etc., which is not limited in the embodiments of the present disclosure.

In some embodiments, a cosine similarity between the first encoding vector and the second encoding vector may be determined as the similarity between the first encoding vector and the second encoding vector; or, the similarity between the first encoding vector and the second encoding vector may be determined according to an Euclidean distance between the first encoding vector and the second encoding vector, which is not limited in the embodiments of the present disclosure.

In some embodiments, the first encoding vector is obtained by inputting the query statement into an intent retrieval model, and the second coding vector corresponding to the preset intent is obtained by inputting the preset intent and the descriptive information of the preset intent into the intent retrieval model. The intent retrieval model is generated by training a pre-trained language model based on a sample statement and a corresponding intent label. Therefore, the query statement, the preset intent, and the descriptive information of the preset intent may be encoded based on the intent retrieval model that is obtained by further training the pre-trained language model, so as to make a determined first encoding vector and second encoding vector more accurate, and further improve the accuracy of determining the first candidate intent.

The pre-trained language model may be an Albert model, a bert model, etc., which is not limited in the embodiments of the present disclosure.

In some embodiments, Albert' architecture mainly includes two key aspects: sharing of embedding layers and sharing of parameter across layers.

The sharing of embedding layers includes word embedding sharing and position embedding sharing. In the Albert, the word embedding matrix for all input text is shared. This means that for the same word, the same word embedding vector is shared regardless of the position in which they appear. Albert also shares the position embedding such that the embedding vectors for each position are also the same. Therefore, the number of parameters may be reduced by sharing these embeddings.

The sharing of parameter across layers further reduces the number of parameters of the model by sharing parameters between hidden layers. In BERT, each layer has its own parameters, which leads to high model complexity. Albert reduces this complexity by sharing parameters to different layers, thus reduces an overall number of parameters.

In some embodiments, a training task of the pre-trained language model mainly include masked language modeling (MLM) and a sentence order prediction (SOP).

In the MLM task, Albert may randomly mask a portion of words in an input text, and then the model needed to predict what these masked words are. This task encourages the model to learn a correlations between words and a structure of a language, because the model needs to infer the masked words based on a context.

In the SOP task, Albert needs to determine whether two sentences are adjacent sentences in an original text. For a pair of adjacent sentences, there is a 50% chance that they are adjacent sentences in the original text, while there is a 50% chance that they are random sentences from different documents. Albert needs to learn to distinguish between these two situations so as to better understand a semantic and logical structure of the text.

In the embodiments of the present disclosure, after obtaining the pre-trained language model, the pre-trained language model is retrained based on the sample statement and the intent label, which may enhance an ability of the model to match the query statement with preset intent coding.

Specifically, the pre-trained language model may be retrained using data pairs (querie, intent, label), in which the query represents the sample statement, the intent represents a machine description of the intent label, and the label is 1. A multiple negatives ranking loss function may be used to calculate a loss of the pre-trained language model. A formula of the loss function is as follows:

$$ J\,(x, y, \theta) \;=\; -\frac{1}{K}\sum_{i=1}^{K}\log P_{approx}(y_i|x_i) = -\frac{1}{K}\sum_{i=1}^{K}\left[S(x_i, y_i) - \log\sum_{j=1}^{K}e^{s(x_i, y_i)}\right] $$

$J\,(x, y, \theta)$ represents a loss function, x represents a query, y represents an intent, $\theta$ represents a model parameter, K represents a batch size, P represents a probability, and S represents a similarity function. Assuming the batch size of K, the input $X = (x_i,..,x_K)$, the output $Y = (y_i,...,y_K)$. The loss function maximizes the similarity of $(x_i, y_i)$ as a positive example, and minimizes the similarity of the other data in the batch $(x_i, y_j)$, $i \neq j$ as a negative example.

At S103, first prompt information is generated based on the query statement, the first candidate intent, and descriptive information of the first candidate intent.

The first prompt information is used to prompt the LLM to determine, based on the first candidate intent and corresponding descriptive information, the first target intent corresponding to the query statement from the first candidate intent.

In some embodiments, the first prompt information may be obtained by filling the query statement, the first candidate intent, and the descriptive information of the first candidate intent into a first prompt template.

For example, the first prompt template may be "Please determine a target intent corresponding to the query statement from the first candidate intent based on the first candidate intent and corresponding descriptive information, the query statement is XXX, the first candidate intent includes XXX, and the descriptive information of the first candidate intent is XXX".

If the query statement is "Please help me find GPT4.pdf" and the first candidate intent is "document searching, and image searching", descriptive information of document searching may be "means that the user is to perform a document searching behavior, and the input may be a document name, a document location, etc.", and descriptive information of image searching may be "means that the user is to perform an image searching behavior, and the input may be a picture name, a picture content, etc.". Corresponding first prompt information may be: Please determine a target intent corresponding to the query statement from first candidate intent based on the first candidate intent and corresponding descriptive information, in which the query statement is "Please help me find GPT4.pdf", the first candidate intent includes "document searching, and image searching", descriptive information of document searching may be "means that the user is to perform a searching behavior, and the input may be a document name, a document location, etc.", and descriptive information of image searching may be "means that the user is to perform an image searching behavior, and the input may be a picture name, a picture content, etc.".

At S104, a first target intent corresponding to the query statement is determined from the first candidate intent by inputting the first prompt information into the LLM.

LLM is a hot topic in a field of artificial intelligence in recent years. LLM learns rich language knowledge and world knowledge by pre-training on massive textual data, thus is able to achieve amazing results on various tasks such as natural language processing (NLP), image generation. For example, Ernie Bot and ChatGPT are applications developed based on LLM, which can generate fluent, logical and creative textual content, and can even have natural conversations with humans. Specifically, LLM may be a Generative Pre-trained Transformer (GPT) model, or, an Enhanced Representation through Knowledge Integration (ERNIE) model.

In the embodiments of the present disclosure, the LLM may be an existing LLM, or a model obtained by fine-tuning an existing LLM. A specific implementation of fine-tuning the LLM are described in detail in subsequent embodiments of the present disclosure.

In the embodiments of the present disclosure, the first target intent corresponding to the query statement may be determined from the first candidate intent based on the first prompt information by using the LLM.

In some embodiments, there may be one or more first target intent, which is not limited in the present disclosure.

In the embodiments of the present disclosure, the query statement, the preset intent, and the descriptive information of the preset intent are obtained; the first candidate intent corresponding to the query statement is obtained by matching the query statement with the preset intent and the descriptive information of the preset intent; the first prompt information is generated based on the query statement, the first candidate intent, and the descriptive information of the first candidate intent; and the first target intent corresponding to the query statement is determined from the first candidate intents by inputting the first prompt information into the LLM. Therefore, the first candidate intent corresponding to the query statement may be first determined, and then LLM is directed to identify the first target intent corresponding to the query statement from the first candidate intent based on the first candidate intent and corresponding descriptive information. Thus, the interference of irrelevant intents can be excluded first, which reduces task difficulty for LLM intent recognition, and improves the accuracy of intent recognition.

FIG. 2 is a flowchart of a method for intent recognition based on LLM according to another embodiment of the present disclosure. As shown in FIG. 2, the method for intent recognition based on LLM includes S201 to S206.

At S201, a query statement, a preset intent, and descriptive information of the preset intent are obtained.

At S202, a first candidate intent corresponding to the query statement is obtained by matching the query statement with the preset intent and the descriptive information of the preset intent.

Specific implementations of S201 and S202 may be described in detail in other embodiments of the present disclosure, which will not be repeated here.

At S203, a user identifier of the query statement is obtained.

A user account that entered the query statement may be determined as the user identifier, or an identifier of an electronic device (for example, an IP address) that entered the query statement may be determined as the user identifier of the query statement when the user account is not logged in.

At S204, historical interaction information corresponding to the query statement is determined based on the user identifier.

In some embodiments, the historical interaction information may include at least one of: a historical query statement corresponding to the user identifier; a second candidate intent corresponding to a historical query statement; descriptive information corresponding to a second candidate intent; a second target intent corresponding to a historical query statement; or a response statement corresponding to a historical query statement. Therefore, the LLM may combine with a plurality of historical interaction information to recognize the intent of the query statement, which improves the accuracy of the acquired first candidate intent.

One or more query statements entered by the user identifier prior to entering the query statement may be determined as the historical query statement.

A specific implementation of the second candidate intent corresponding to the historical query statement is the same as the implementation of the first candidate intent corresponding to the query statement, which will not be repeated here.

In some embodiments, the prompt information is generated based on the historical query statement, a third candidate intent, descriptive information corresponding to the third candidate intent, and the historical interaction information prior to the historical query statement, and the second target intent corresponding to the historical query statement is obtained by inputting the prompt information into the LLM.

A response statement corresponding to the historical query statement may be an answer corresponding to the query statement obtained by processing the query statement based on the second target intent.

At S205, first prompt information is generated based on the query statement, the first candidate intent, the descriptive information of the first candidate intent, and the historical interaction information.

The first prompt information is used to prompt the LLM to determine the first target intent corresponding to the query statement from first candidate intents based on the historical interaction information, the first candidate intent and corresponding descriptive information.

In some embodiments, the first prompt information is obtained by filling the query statement, the historical interaction information, the first candidate intent, and the descriptive information of the first candidate intent into a second prompt template.

For example, the first prompt template may be "Please determine a target intent corresponding to the query statement from first candidate intents based on historical interaction information, a first candidate intent, and corresponding descriptive information, in which the query statement is XXX, the historical interaction information is XXX, the first candidate intent includes XXX, and the descriptive information of the first candidate intent is XXX".

At S206, a first target intent corresponding to the query statement is determined from the first candidate intent by inputting the first prompt information into LLM.

In the embodiments of the present disclosure, LLM may identify the first target intent corresponding to the query statement from the first candidate intent based on the historical interaction information, the first candidate intent, and the corresponding descriptive information.

In the embodiments of the present disclosure, the query statement, the preset intent, and the descriptive information of the preset intent are obtained; the first candidate intent corresponding to the query statement is obtained by matching the query statement with the preset intent and the descriptive information of the preset intent; the user identifier of the query statement is obtained; the historical interaction information corresponding to the query statement is determined based on the user identifier; and the first prompt information is generated based on the query statement, the first candidate intent, the descriptive information of the first candidate intent, and the historical interaction information. Therefore, the first candidate intent corresponding to the query statement and the historical interaction information are first determined, LLM is guided to identify the first target intent corresponding to the query statement from the first candidate intent based on the first candidate intent, corresponding descriptive information and the historical interaction information, so as to first eliminate the interference of an irrelevant intent, reduce difficulty for the LLM intent recognition. Moreover, the LLM may combine with context interaction information to identify an intent of the query statement, which further improves accuracy of intent recognition.

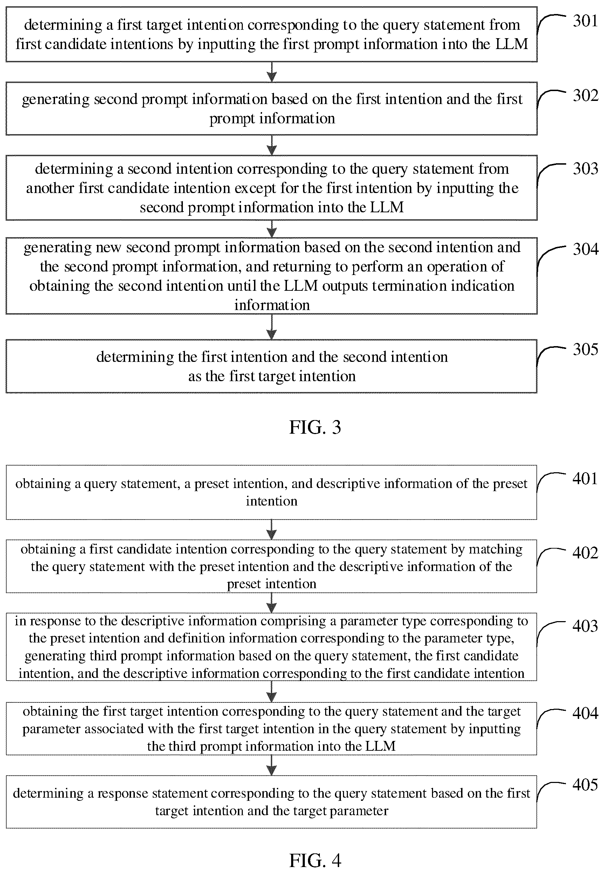

**FIG.** 3 is a flowchart of a method for intent recognition based on an LLM according to another embodiment of the present disclosure. As shown in FIG. 3, the method for intent recognition based on an LLM includes S301 to S305.

**At** S301, a first target intent corresponding to the query statement is determined from first candidate intent by inputting the first prompt information into the LLM.

A first prompt word may be generated based on the query statement, the first candidate intent, and the descriptive information of the first candidate intent, or based on the query statement, the first candidate intent, the descriptive information of the first candidate intent, and the historical interaction information. A specific implementation may refer to a detailed description of other embodiments in the present disclosure, which will not be repeated here.

It needs to be noted that for a query statement including complex intents, it is difficult to identify all intents in the query statement at once. Therefore, in the embodiments of the present disclosure, the LLM may be used for a plurality of interactions so as to accurately identify all intents in the complex intents. For example, "Please help me summarize a document GPT4.pdf" is a query statement comprising complex intents, which includes two intents: the first intent is a document searching intent, and the second intent is a full text summarizing intent.

The first intent may be an intent corresponding to a first processing operation in the query statement. For example, when the query statement is "Please help me summarize a document GPT4.pdf", a corresponding first step may be to search the document GPT4.pdf, and a second step is to summarize the document. Therefore, the first intent is the document searching intent.

At S302, second prompt information is generated based on the first intent and the first prompt information.

A second prompt word is used to prompt the LLM to continue to recognize the intent of the query statement based on other first candidate intent except for the first intent, so as to obtain the second intent of the query statement.

In some embodiments, the second prompt information is obtained by filling the first intent and the first prompt information into the third prompt template.

At S303, a second intent corresponding to the query statement is determined from another first candidate intents except for the first intent by inputting the second prompt information into the LLM.

A processing operation corresponding to the second intent in the query statement is executed after a processing operation corresponding to the first intent in the query statement.

For example, when the query statement is "Please help me summarize a document GPT4.pdf", a corresponding first step may be to search the document GPT4.pdf, and a second step is to summarize the document. Therefore, a first intent is the document searching intent, and a second intent is a document summarizing intent. Therefore, the processing operation corresponding to the second intent in the query statement is executed after the processing operation corresponding to the first intent in the query statement.

At S304, new second prompt information is generated based on the second intent and the second prompt information, and it is returned to perform an operation of obtaining the second intent until the LLM outputs termination indication information.

In some embodiments, new second prompt information is generated by filling the second intent and the second prompt information into the third prompt template.

The new second prompt information may be used to prompt the LLM to continue to recognize the intent of the query statement based on other first candidate intents except for the first intent and the second intent.

In some embodiments, after the intent recognition of the query statement is completed, the LLM may output the termination indication information, for example, output "intent recognition is complete", "intent recognition has been completed", and so on, which is not limited in the present disclosure.

In some embodiments, there may be one or more second intents, which is not limited in the present disclosure.

At S305, the first intent and the second intent are determined as the first target intent.

In the embodiments of the present disclosure, after obtaining the first prompt information, the first target intent corresponding to the query statement is determined from the first candidate intents by inputting the first prompt information into the LLM; the second prompt information is generated based on the first intent and the first prompt information; the second intent corresponding to the query statement is determined from the other first candidate intent except for the first intent by inputting the second prompt information into the LLM; the new second prompt information is generated based on the second intent and the second prompt information, and it is returned to perform the operation of obtaining the second intent until the LLM outputs the termination indication information; and the first intent and the second intent are determined as the first target intent. Therefore, in the embodiments of the present disclosure, a plurality of interactions may be performed with the LLM, so that the LLM may recognize the intent of the query statement for many times, which may not only identify a complex intent in the query statement, but also improve accuracy of the intent recognition.

FIG. 4 is a flowchart of a method for intent recognition based on an LLM according to another embodiment of the present disclosure. As shown in FIG. 4, the method for intent recognition based on an LLM includes S401 to S405.

At S401, a query statement, a preset intent, and descriptive information of the preset intent are obtained.

At S402, a first candidate intent corresponding to the query statement is obtained by matching the query statement with the preset intent and the descriptive information of the preset intent.

Specific implementations of S401 and S402 may be described in detail in other embodiments of the present disclosure, which will not be repeated here.

At S403, in response to the descriptive information including a parameter type corresponding to the preset intent and definition information corresponding to the parameter type, third prompt information is generated based on the query statement, the first candidate intent, and the descriptive information corresponding to the first candidate intent.

A third prompt word is used to prompt the LLM to determine the first target intent corresponding to the query statement from first candidate intents and extract a target parameter corresponding to the first target intent from query statements.

The descriptive information of the preset intent may include definition information of the preset intent, or, a parameter type corresponding to the preset intent and definition information corresponding to each parameter type.

For example, if the preset intent is a document searching intent, a corresponding parameter type may include: time, a document type, an operation, a document location, a keyword, etc. Definition information corresponding to the time may be "document time that a user wants to search, which may be an exact time September 3, 2023, or an inaccurate time description such as last week and a few days ago". Definition information corresponding to the document type may be "a document format and document type that the user wants to search, which may be a basic document type such as a document, a video, etc., or a specific format such as pdf, ppt, etc., or a content classification of a video such as a movie, a TV series, a variety show, a cartoon, etc.".

In some embodiments, the third prompt information is generated based on the query statement, the first candidate intent, and the descriptive information corresponding to the first candidate intent.

For example, the first prompt template may be "Please determine a target intent corresponding to the query statement from the first candidate intent according to the first candidate intent and corresponding descriptive information, and extract a target parameter from the query statement based on a target parameter corresponding to the target intent, in which the query statement is XXX, the first candidate intent includes XXX, and the descriptive information of the first candidate intent is XXX".

In some embodiments, in case that the descriptive information includes the parameter type corresponding to the preset intent and the definition information corresponding to the parameter type, the third prompt information is generated based on the query statement, the first candidate intent, the descriptive information corresponding to the first candidate intent and the historical interaction information.

In the embodiments of the present disclosure, in case that the descriptive information includes the parameter type corresponding to the preset intent and the definition information corresponding to the parameter type, the LLM may also be prompted by the third prompt word to simultaneously obtain the first target intent corresponding to the query statement and the target parameter corresponding to the first target intent.

At S404, the first target intent corresponding to the query statement and the target parameter associated with the first target intent in the query statement is obtained by inputting the third prompt information into the LLM.

**It** needs to be noted that the third prompt word is used to prompt the LLM to determine the first target intent corresponding to the query statement from the first candidate intent and extract the target parameter corresponding to the first target intent from the query statements. Therefore, the first target intent corresponding to the query statement and the target parameter associated with the first target intent in the query statement output by the LLM may be obtained.

At S405, a response statement corresponding to the query statement is determined based on the first target intent and the target parameter.

In the embodiments of the present disclosure, after the first target intent and the target parameter are determined, a response statement corresponding to the query statement is obtained by processing the query statement based on the target intent and the target parameter.

In some embodiments, the response statement corresponding to the query statement may be generated based on the first target intent and the target parameter by template matching, machine learning and other technologies.

In the embodiments of the present disclosure, in case that the descriptive information includes the parameter type corresponding to the preset intent and the definition information corresponding to the parameter type, the third prompt information is generated based on the query statement, the first candidate intent, and the descriptive information corresponding to the first candidate intent; the first target intent corresponding to the query statement and the target parameter associated with the first target intent in the query statement is obtained by inputting the third prompt information into the LLM; and the response statement corresponding to the query statement is determined based on the first target intent and the target parameter. Therefore, in case that the descriptive information includes the parameter type corresponding to the preset intent and the definition information corresponding to the parameter type, the LLM may be prompted to obtain the first target intent corresponding to the query statement and the target parameter corresponding to the first target intent in the query statement at the same time, and generate the response statement, which improves efficiency and accuracy of determining the reply statement.

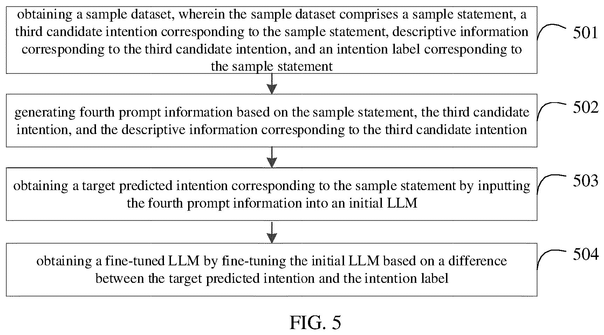

FIG. 5 is a flowchart of a method for fine-tuning based on an LLM according to one embodiment of the present disclosure. As shown in FIG. 5, the method for fine-tuning based on an LLM includes S501 to S504.

At S501, a sample dataset is obtained, in which the sample dataset includes a sample statement, a third candidate intent corresponding to the sample statement, descriptive information corresponding to the third candidate intent, and an intent label corresponding to the sample statement.

The sample statement may be a statement collected online. For example, a web crawler technology may be used to collect the sample statement online, or, the historical query statement may be used as the sample statement.

A method for determining the third candidate intent corresponding to the sample statement may refer to a detailed description of the method for determining the first candidate intent corresponding to the query statement in the present disclosure, which will not be repeated here.

The intent label corresponding to the sample statement may be a first intent corresponding to the sample statement determined artificially.

In some embodiments, the intent label corresponding to the sample statement includes all intents corresponding to the sample statement. There may be one or more intents contained in the intent label, which will not be repeated here.

At S502, fourth prompt information is generated based on the sample statement, the third candidate intent, and the descriptive information corresponding to the third candidate intent.

A fourth prompt word is used to prompt an initial LLM to predict an intent corresponding to the sample statement based on the third candidate intent and the descriptive information corresponding to the third candidate intent.

**In** some embodiments, the fourth prompt information is obtained by filling the sample statement, the third candidate intent, and the descriptive information corresponding to the third candidate intent into the first prompt template.

**In** some embodiments, in case of the sample dataset also includes a historical interaction sample corresponding to the sample statement, fourth prompt information is generated based on the sample statement, the third candidate intent, the descriptive information corresponding to the third candidate intent and a historical interaction sample. Therefore, fine-tuning of the initial LLM in combination with the historical interaction sample corresponding to the sample statement may improve a performance for intent recognition of a fine-tuned LLM in combination with the historical interaction information corresponding to the query statement, so that the fine-tuned LLM may recognize the intent of the query statement in combination with the historical interaction information corresponding to the query statement, which improves accuracy of recognizing the intent of the query statement.

In some embodiments, the historical interaction sample may include at least one of: a historical sample statement corresponding to a user identifier of the sample statement; a fourth candidate intent corresponding to the historical sample statement; descriptive information corresponding to the fourth candidate intent; a third target intent corresponding to a historical sample statement; or a response statement corresponding to a historical sample statement.

One or more query statements inputted by the user identifier of the sample statement prior to the input of the sample statement may be determined as the historical sample statement.

A specific implementation of the fourth candidate intent corresponding to the historical sample statement is the same as the implementation of the first candidate intent corresponding to the query statement, which will not be repeated here.

In some embodiments, the third target intent corresponding to the historical sample statement may be an artificially labeled intent label corresponding to a historical sample statement.

The response statement corresponding to the historical sample statement may be an answer corresponding to the sample statement obtained by processing the query statement according to the third target intent.

In some embodiments, the fourth prompt information may be generated by filling the sample statement, the third candidate intent, the descriptive information corresponding to the third candidate intent and the historical interaction sample into a second prompt template.

At S503, a target predicted intent corresponding to the sample statement is obtained by inputting the fourth prompt information into an initial LLM.

The initial LLM may be an untrained GPT model, or, an ERNIE model.

At S504, a fine-tuned LLM is obtained by fine-tuning the initial LLM based on a difference between the target predicted intent and the intent label.

In some embodiments, a preset loss function may be used to calculate a difference between the target predicted intent and the intent label, and the initial LLM may be fine-tuned based on a calculated loss value.

In the embodiments of the present disclosure, a small number of sample datasets are added on the basis of an existing initial LLM to fine-tune the initial LLM, so that a fine-tuned LLM may enhance a performance of the fine-tuned LLM in an intent recognition scenario while maintaining a performance of the initial LLM.

The fine-tuned LLM is used for recognizing the intent of the query statement.

In the embodiments of the present disclosure, the sample dataset is obtained, in which the sample dataset includes the sample statement, the third candidate intent corresponding to the sample statement, the descriptive information corresponding to the third candidate intent, and the intent label corresponding to the sample statement; the fourth prompt information is generated based on the sample statement, the third candidate intent, and the descriptive information corresponding to the third candidate intent; the target predicted intent corresponding to the sample statement is obtained by inputting the fourth prompt information into the initial LLM; and the fine-tuned LLM is obtained by fine-tuning the initial LLM based on the difference between the target predicted intent and the intent label. Therefore, the initial LLM is fine-tuned based on the sample statement, the third candidate intent corresponding to the sample statement, the descriptive information corresponding to the third candidate intent, and the intent label corresponding to the sample statement, which improves a performance of the fine-tuned LLM and improves accuracy of recognizing the intent of the query statement based on the fine-tuned LLM.

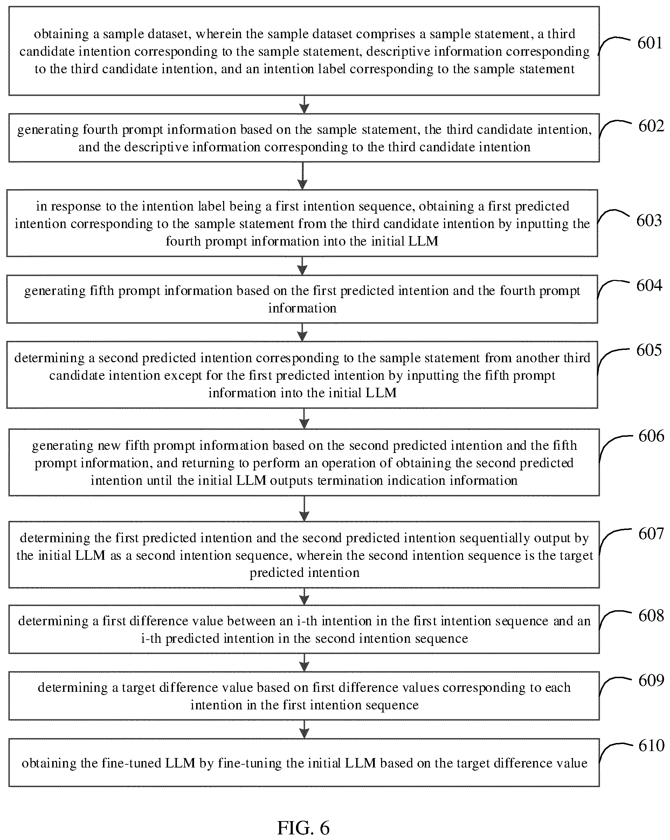

FIG. 6 is a flowchart of a method for fine-tuning based on an LLM according to another embodiment of the present disclosure. As shown in FIG. 6, the method for intent recognition based on an LLM includes S601 to S610.

At S601, a sample dataset is obtained, in which the sample dataset includes a sample statement, a third candidate intent corresponding to the sample statement, descriptive information corresponding to the third candidate intent, and an intent label corresponding to the sample statement.

At S602, fourth prompt information is generated based on the sample statement, the third candidate intent, and the descriptive information corresponding to the third candidate intent.

In some embodiments, the fourth prompt information may also be generated based on the sample statement, the third candidate intent, the descriptive information corresponding to the third candidate intent, and a historical interaction sample.

At S603, in response to the intent label being a first intent sequence, a first predicted intent corresponding to the sample statement is obtained from third candidate intent by inputting the fourth prompt information into the initial LLM.

A processing operation corresponding to the i-th intent in the first intent sequence in the sample statement is located after a processing operation corresponding to the (i-1)-th intent in the sample statement.

For example, if the sample statement is "Please help me summarize a document GPT4.pdf", a corresponding first step may be to search the document GPT4.pdf, and a second step is to summarize the document. Therefore, a first intent in the first intent sequence is the document searching intent, and a second intent is a document summarizing intent.

The first predicted intent is the first intent corresponding to a predicted sample statement after the LLM predicts the intent of the sample statement based on the candidate intent.

At S604, fifth prompt information is generated based on the first predicted intent and the fourth prompt information.

A fifth prompt word is used to prompt the initial LLM the first predicted intent corresponding to the sample statement, and continuously identify the intent of the query statement based on other third candidate intents except for the first predicted intent so as to predict a second predicted intent corresponding to the predicted sample statement.

In some embodiments, the fifth prompt information is generated based on the first predicted intent and the fourth prompt information.

At S605, a second predicted intent corresponding to the sample statement is determined from another third candidate intents except for the first predicted intent by inputting the fifth prompt information into the initial LLM.

A processing operation corresponding to the second predicted intent predicted by the initial LLM is executed after the processing operation corresponding to the first predicted intent in the query statement.

At S606, new fifth prompt information is generated based on the second predicted intent and the fifth prompt information, and it is returned to perform an operation of obtaining the second predicted intent until the initial LLM outputs termination indication information.

In some embodiments, the new fifth prompt information is generated by filling the second predicted intent and the fifth prompt information into a third prompt template.

The new fifth prompt information may be used to prompt the initial LLM to continue to recognize the intent of the sample statement based on other third candidate intents except for the first predicted intent and the second predicted intent.

In some embodiments, after the intent recognition of the sample statement by the initial LLM is completed, termination indication information may be output, for example, output "intent recognition is complete", "intent recognition has been completed", and so on, which is not limited in the present disclosure.

In some embodiments, there may be one or more second intents, which is not limited in the present disclosure.

At S607, the first predicted intent and the second predicted intent sequentially output by the initial LLM is determined as second intent sequences, in which the second intent sequence is the target predicted intent.

The second intent sequence is a first predicted intent, a first output second predicted intent, a second output second predicted intent,...,.

At S608, a first difference value between the i-th intent in the first intent sequence and an i-th predicted intent in the second intent sequence is determined.

In some embodiments, the first difference value between the i-th intent in the first intent sequence and the i-th predicted intent in the second intent sequence may be calculated based on a preset loss function.

At S609, a target difference value is determined based on first difference values corresponding to each intent in the first intent sequence.

In some embodiments, a sum of the first difference values corresponding to each intent in the first intent sequence may be determined as the target difference value.

Therefore, the target difference value is determined based on the first difference value between the i-th intent in the first intent sequence and the i-th predicted intent in the second intent sequence is determined, so that the LLM may learn an order of processing operations corresponding to each intent in the sample statement, which accurately identifies all intents in the query statement and an order of intents in the query statement.

At S610, the fine-tuned LLM is obtained by fine-tuning the initial LLM based on the target difference value.

In the embodiments of the present disclosure, in response to the intent label being the first intent sequence, the first predicted intent corresponding to the sample statement is obtained from the third candidate intents by inputting the fourth prompt information into the initial LLM; the fifth prompt information is generated based on the first predicted intent and the fourth prompt information; the second predicted intent corresponding to the sample statement is determined from the other third candidate intents except for the first predicted intent by inputting the fifth prompt information into the initial LLM; the new fifth prompt information is generated based on the second predicted intent and the fifth prompt information, and it is returned to perform the operation of obtaining the second predicted intent until the initial LLM outputs the termination indication information; the first predicted intent and the second predicted intent sequentially output by the initial LLM is determined as the second intent sequence; the first difference value between the i-th intent in the first intent sequence and the i-th predicted intent in the second intent sequence is determined; the target difference value is determined based on the first difference values corresponding to each intent in the first intent sequence; and the fine-tuned LLM is obtained by fine-tuning the initial LLM based on the target difference value. Therefore, when fine-tuning the LLM, a plurality of interactions may be performed with the LLM, and the loss may be calculated based on the intent sequence corresponding to the sample statement, so that the fine-tuned LLM may not only identify all intents in the sample statement, but also learn the order of the processing operations corresponding to each intent in the sample statement. In this way, the fine-tuned LLM may not only identify complex intents, but also identify the order of each intent in the query statement.

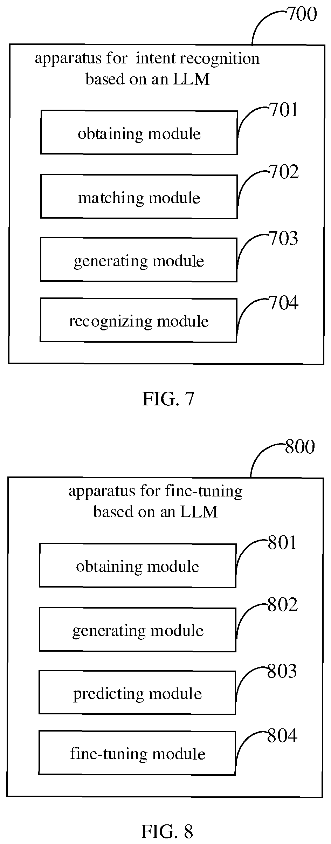

FIG. 7 is a schematic diagram of an apparatus for intent recognition based on an LLM according to one embodiment of the present disclosure. As shown in FIG. 7, the apparatus 700 for intent recognition based on an LLM includes:

an obtaining module 701, configured to obtain a query statement, a preset intent, and descriptive information of the preset intent;

a matching module 702, configured to obtain a first candidate intent corresponding to the query statement by matching the query statement with the preset intent and the descriptive information of the preset intent;

a generating module 703, configured to generate first prompt information based on the query statement, the first candidate intent, and descriptive information of the first candidate intent; and

a recognizing module 704, configured to determine a first target intent corresponding to the query statement from first candidate intents by inputting the first prompt information into the LLM.

In some embodiments of the present disclosure, the generating module 703 is configured to:

obtain a user identifier of the query statement;

determine historical interaction information corresponding to the query statement based on the user identifier; and

generate the first prompt information based on the query statement, the first candidate intent, the descriptive information of the first candidate intent, and the historical interaction information.

In some embodiments of the present disclosure, the historical interaction information includes at least one of:

a historical query statement corresponding to the user identifier;

a second candidate intent corresponding to a historical query statement;

descriptive information corresponding to a second candidate intent;

a second target intent corresponding to a historical query statement; or

a response statement corresponding to a historical query statement.

In some embodiments of the present disclosure, the recognizing module 704 is configured to:

obtain a first intent corresponding to the query statement from the first candidate intents by inputting the first prompt information into the LLM;

generate second prompt information based on the first intent and the first prompt information;

determine a second intent corresponding to the query statement from another first candidate intents except for the first intent by inputting the second prompt information into the LLM, in which a processing operation corresponding to the second intent in the query statement is executed after a processing operation corresponding to the first intent in the query statement;

generate new second prompt information based on the second intent and the second prompt information, and returning to perform an operation of obtaining the second intent until the LLM outputs termination indication information; and

determine the first intent and the second intent as the first target intent.

In some embodiments of the present disclosure, the matching module 702 is configured to:

determine a first encoding vector corresponding to the query statement, and a second encoding vector corresponding to the preset intent and the descriptive information of the preset intent;

calculate a similarity between the first encoding vector and the second encoding vector; and

identify a first number of preset intents with the highest similarity as the first candidate intent.

In some embodiments of the present disclosure, the matching module 702 is configured to:

obtain the first encoding vector by inputting the query statement into an intent retrieval model; and

obtain the second encoding vector corresponding to the preset intent by concatenating and inputting the preset intent and the descriptive information corresponding to the preset intent into the intent retrieval model,
in which the intent retrieval model is generated by training a pre-trained language model based on a sample statement and a corresponding intent label.

In some embodiments of the present disclosure, the apparatus further includes a determining module, configured to:

in response to the descriptive information including a parameter type corresponding to the preset intent and definition information corresponding to the parameter type, generate third prompt information based on the query statement, the first candidate intent, and the descriptive information corresponding to the first candidate intent, in which the third prompt information is configured to prompt the LLM to determine the first target intent corresponding to the query statement from first candidate intents and extract a target parameter corresponding to the first target intent from query statements;
obtain the first target intent corresponding to the query statement and the target parameter associated with the first target intent in the query statement by inputting the third prompt information into the LLM; and
determine a response statement corresponding to the query statement based on the first target intent and the target parameter.

It needs to be noted that an explanation of the method for intent recognition based on an LLM also applies to the apparatus for intent recognition based on an LLM in the present disclosure, which will not be repeated here.
In the embodiments of the present disclosure, the query statement, the preset intent, and the descriptive information of the preset intent are obtained; the first candidate intent corresponding to the query statement is obtained by matching the query statement with the preset intent and the descriptive information of the preset intent; the first prompt information is generated based on the query statement, the first candidate intent, and the descriptive information of the first candidate intent; and the first target intent corresponding to the query statement is determined from the first candidate intents by inputting the first prompt information into the LLM. Therefore, the first candidate intent corresponding to the query statement may be first determined, and then the LLM is guided to identify the first target intent corresponding to the query statement from the first candidate intents based on the first candidate intent and corresponding descriptive information, so as to first eliminate interference of an irrelevant intent, reduce difficulty for the LLM in intent recognition, and improve accuracy of intent recognition.
FIG. 8 is a schematic diagram of an apparatus for fine-tuning based on an LLM according to another embodiment of the present disclosure. As shown in FIG. 8, the apparatus for fine-tuning based on an LLM includes:

an obtaining module 801, configured to obtain a sample dataset, in which the sample dataset includes a sample statement, a third candidate intent corresponding to the sample statement, descriptive information corresponding to the third candidate intent, and an intent label corresponding to the sample statement;
a generating module 802, configured to generate fourth prompt information based on the sample statement, the third candidate intent, and the descriptive information corresponding to the third candidate intent;
a predicting module 803, configured to obtain a target predicted intent corresponding to the sample statement by inputting the fourth prompt information into an initial LLM; and
a fine-tuning module 804, configured to obtain a fine-tuned LLM by fine-tuning the initial LLM based on a difference between the target predicted intent and the intent label.

In some embodiments of the present disclosure, the generating module 802 is configured to:
in response to the sample dataset further including a historical interaction sample corresponding to the sample statement, generate the fourth prompt information based on the sample statement, the third candidate intent, the descriptive information corresponding to the third candidate intent, and the historical interaction sample.
In some embodiments of the present disclosure, the predicting module 803 is configured to:

in response to the intent label being a first intent sequence, obtain a first predicted intent corresponding to the sample statement from third candidate intent by inputting the fourth prompt information into the initial LLM, in which a processing operation corresponding to the i-th intent in the first intent sequence in the sample statement is located after a processing operation corresponding to the (i-1)-th intent in the sample statement;
generate fifth prompt information based on the first predicted intent and the fourth prompt information;
determine a second predicted intent corresponding to the sample statement from another third candidate intents except for the first predicted intent by inputting the fifth prompt information into the initial LLM;
generate new fifth prompt information based on the second predicted intent and the fifth prompt information, and return to perform an operation of obtaining the second predicted intent until the initial LLM outputs termination indication information; and
determine the first predicted intent and the second predicted intent sequentially output by the initial LLM as second intent sequence, in which the second intent sequence is the target predicted intent.

In some embodiments of the present disclosure, the fine-tuning module 804 is configured to:

calculate a first difference value between the i-th intent in the first intent sequence and the i-th predicted intent in the second intent sequence;
determine a target difference value based on first difference values corresponding to each intent in the first intent sequence; and
obtain the fine-tuned LLM by fine-tuning the initial LLM based on the target difference value.

It needs to be noted that an explanation of the method for fine-tuning based on an LLM also applies to the apparatus for fine-tuning based on an LLM in the present disclosure, which will not be repeated here.

In the embodiments of the present disclosure, the sample dataset is obtained, in which the sample dataset includes the sample statement, the third candidate intent corresponding to the sample statement, the descriptive information corresponding to the third candidate intent, and the intent label corresponding to the sample statement; the fourth prompt information is generated based on the sample statement, the third candidate intent, and the descriptive information corresponding to the third candidate intent; the target predicted intent corresponding to the sample statement is obtained by inputting the fourth prompt information into the initial LLM; and the fine-tuned LLM is obtained by fine-tuning the initial LLM based on the difference between the target predicted intent and the intent label. Therefore, the initial LLM is fine-tuned based on the sample statement, the third candidate intent corresponding to the sample statement, the descriptive information corresponding to the third candidate intent, and the intent label corresponding to the sample statement, which improves a performance of the fine-tuned LLM and improves accuracy of recognizing the intent of the query statement based on the fine-tuned LLM.

According to the embodiments of the present disclosure, the present disclosure also provides an electronic device, a readable storage medium and a computer program product.

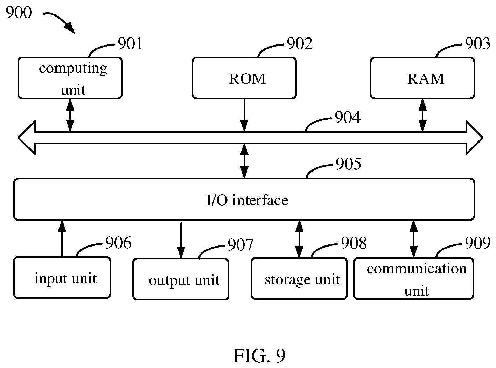

Please refer to FIG. 9, which is a block diagram of an electronic device 900 used to implement the embodiments of the present disclosure. The electronic device is intended to represent various types of digital computers, such as laptop computers, desktop computers, workstations, personal digital assistants, servers, blade servers, mainframe computers, and other suitable computers. The electronic device may also represent various types of mobile devices, such as personal digital assistants, cellular phones, smart phones, wearable devices, and other similar computing devices. The components shown herein, their connections and relations, and their functions are merely examples, which are not intended to limit the implementations of the disclosure described and/or required herein.

As shown in FIG. 9, the device 900 includes a computing unit 901, configured to execute various appropriate actions and processes according to a computer program stored in a read-only memory (ROM) 902 or a computer program loaded from a storage unit 908 to a random access memory (RAM) 903. In the RAM 903, various programs and data required for the device 900 may be stored. The computing unit 901, the ROM 902 and the RAM 903 may be connected with each other by a bus 904. An input/output (I/O) interface 905 is also connected to the bus 904.

The plurality of components in the device 900 are connected to the I/O interface 905, including: an input unit 906, for example, a keyboard, and a mouse; an output unit 907, for example, various types of displays, and speakers; a storage unit 908, for example, a magnetic disk, and an optical disk; and a communication unit 909, for example, a network card, a modem, and a wireless transceiver. The communication unit 909 allows the device 900 to exchange information/data through a computer network such as Internet and/or various types of telecommunication networks with other devices.

The computing unit 901 may be various types of general and/or dedicated processing components with processing and computing abilities. Some examples of a computing unit 901 include but not limited to a central processing unit (CPU), a graphics processing unit (GPU), various dedicated artificial intelligence (AI) computing chips, various computing units on which a machine learning model algorithm is running, a digital signal processor (DSP), and any appropriate processor, controller, microcontroller, etc. The computing unit 901 executes various methods and processes as described above, for example, a method for intent recognition based on an LLM. For example, in some embodiments, the method for intent recognition based on an LLM may be further implemented as a computer software program, which is tangibly contained in a machine readable medium, such as the storage unit 908. In some embodiments, a part or all of the computer program may be loaded and/or installed on the device 900 via the ROM 902 and/or the communication unit 909. When the computer program is loaded on the RAM 903 and executed by the computing unit 901, one or more steps in the method for intent recognition based on an LLM may be performed as described above. Optionally, in other embodiments, the computing unit 901 may be configured to the method for intent recognition based on an LLM in other appropriate ways (for example, by virtue of a firmware).

Various implementations of the systems and techniques described above may be implemented by one and/or a combination of a digital electronic circuit system, an integrated circuit system, a field programmable gate array (FPGA), an application specific integrated circuit (ASIC), an application specific standard product (ASSP), a system on chip (SOC), a load programmable logic device (CPLD), a computer hardware, a firmware, and a software. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided for the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, electrically programmable read-only-memory (EPROM), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a cathode ray tube (CRT) or a liquid crystal display (LCD) monitor for displaying information to a user); and a keyboard and pointing device (e.g., a mouse or trackball) through which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (e.g., a data server), or a computing system that includes middleware components (e.g., an application server), or a computing system that includes front-end components (e.g., a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a cloud computing server or cloud host, which is a host product in a cloud computing service system, so as to solve problems including difficult management and weak service scalability in a traditional physical host and a virtual private server (VPS). The server may also be a server of a distributed system, or a server combined with a block-chain.

It may be understood that various forms of processes shown above may be used to reorder, add or delete steps. For example, the steps described in the disclosure could be performed in parallel, sequentially, or in a different order, as long as the desired result of the technical solution disclosed in the disclosure is achieved, which is not limited here.

In addition, terms such as "first" and "second" are used herein for purposes of description and are not intended to indicate or imply relative importance or significance. Thus, the feature defined with "first" and "second" may include one or more this feature. In the description of the present disclosure, "a plurality of" means at least two, for example, two or three, unless specified otherwise. Terms "if" and "in response to" used here may be interpreted as "when", "while", "in response to determining...", or "in case that".

The above specific embodiments do not constitute a limitation on the protection scope of the disclosure. Those skilled in the art should understand that various modifications, combinations, sub-combinations and substitutions may be made according to design requirements and other factors. Any modification, equivalent replacement and improvement made within the spirit and principle of the disclosure shall be included in the protection scope of the disclosure.

**Claims**

1. A method for intent recognition based on a large language model, LLM, comprising:

   obtaining (101) a query statement, a preset intent, and descriptive information of the preset intent;
   obtaining (102) a first candidate intent corresponding to the query statement by matching the query statement with the preset intent and the descriptive information of the preset intent;
   generating (103) first prompt information based on the query statement, the first candidate intent, and descriptive information of the first candidate intent; and
   determining (104) a first target intent corresponding to the query statement from the first candidate intent by inputting the first prompt information into the LLM.

2. The method of claim 1, wherein generating (103) the first prompt information based on the query statement, the first candidate intent, and the descriptive information of the first candidate intent comprises:

   obtaining (203) a user identifier of the query statement;
   determining (204) historical interaction information corresponding to the query statement based on the user identifier; and
   generating (205) the first prompt information based on the query statement, the first candidate intent, the descriptive information of the first candidate intent, and the historical interaction information.

3. The method of claim 2, wherein the historical interaction information comprises at least one of:

   a historical query statement corresponding to the user identifier;
   a second candidate intent corresponding to a historical query statement;
   descriptive information corresponding to the second candidate intent;
   a second target intent corresponding to the historical query statement; or
   a response statement corresponding to the historical query statement.

4. The method of claim 1 or 2, wherein determining (104) the first target intent corresponding to the query statement from the first candidate intent by inputting the first prompt information into the LLM comprises:

   obtaining (301) a first intent corresponding to the query statement from the first candidate intent by inputting the first prompt information into the LLM;
   generating (302) second prompt information based on the first intent and the first prompt information;
   determining (303) a second intent corresponding to the query statement from another first candidate intent except for the first intent by inputting the second prompt information into the LLM, wherein a processing operation corresponding to the second intent in the query statement is executed after a processing operation corresponding to the first intent in the query statement;
   generating (304) new second prompt information based on the second intent and the second prompt information, and returning to perform an operation of obtaining the second intent until the LLM outputs termination indication information; and
   determining (305) the first intent and the second intent as the first target intent.

5. The method of claim 1, wherein obtaining (102) the first candidate intent corresponding to the query statement by matching the query statement with the preset intent and the descriptive information of the preset intent comprises:

   determining a first encoding vector corresponding to the query statement, and a second encoding vector corresponding to the preset intent and the descriptive information of the preset intent;
   calculating a similarity between the first encoding vector and the second encoding vector; and
   identifying a first number of preset intents with a highest similarity as the first candidate intent.

6. The method of claim 5, wherein determining the first encoding vector corresponding to the query statement, and the second encoding vector corresponding to the preset intent and the descriptive information of the preset intent comprises:

   obtaining the first encoding vector by inputting the query statement into an intent retrieval model; and
   obtaining the second encoding vector corresponding to the preset intent by concatenating and inputting the preset intent and the descriptive information corresponding to the preset intent into the intent retrieval model, wherein the intent retrieval model is generated by training a pre-trained language model based on a sample statement and a corresponding intent label.

7. The method of claim 1, further comprising:

in response to the descriptive information comprising a parameter type corresponding to the preset intent and definition information corresponding to the parameter type, generating (403) third prompt information based on the query statement, the first candidate intent, and the descriptive information corresponding to the first candidate intent, wherein the third prompt information is configured to prompt the LLM to determine the first target intent corresponding to the query statement from the first candidate intent and extract a target parameter corresponding to the first target intent from the query statement;

obtaining (404) the first target intent corresponding to the query statement and the target parameter associated with the first target intent in the query statement by inputting the third prompt information into the LLM; and

determining (405) a response statement corresponding to the query statement based on the first target intent and the target parameter.

8. A method for fine-tuning based on a large language model, LLM, comprising:

obtaining (501) a sample dataset, wherein the sample dataset comprises a sample statement, a third candidate intent corresponding to the sample statement, descriptive information corresponding to the third candidate intent, and an intent label corresponding to the sample statement;

generating (502) fourth prompt information based on the sample statement, the third candidate intent, and the descriptive information corresponding to the third candidate intent;

obtaining (503) a target predicted intent corresponding to the sample statement by inputting the fourth prompt information into an initial LLM; and

obtaining (504) a fine-tuned LLM by fine-tuning the initial LLM based on a difference between the target predicted intent and the intent label.

9. The method of claim 8, wherein generating (502) the fourth prompt information based on the sample statement, the third candidate intent, and the descriptive information corresponding to the third candidate intent comprises:

in response to the sample dataset further comprising a historical interaction sample corresponding to the sample statement, generating the fourth prompt information based on the sample statement, the third candidate intent, the descriptive information corresponding to the third candidate intent, and the historical interaction sample.

10. The method of claim 8 or 9, wherein obtaining (503) the target predicted intent corresponding to the sample statement by inputting the fourth prompt information into the initial LLM comprises:

in response to the intent label being a first intent sequence, obtaining (603) a first predicted intent corresponding to the sample statement from the third candidate intent by inputting the fourth prompt information into the initial LLM, wherein a processing operation corresponding to the i-th intent in the first intent sequence in the sample statement is located after a processing operation corresponding to the (i-1)-th intent in the sample statement;

generating (604) fifth prompt information based on the first predicted intent and the fourth prompt information;

determining (605) a second predicted intent corresponding to the sample statement from another third candidate intents except for the first predicted intent by inputting the fifth prompt information into the initial LLM;

generating (606) new fifth prompt information based on the second predicted intent and the fifth prompt information, and returning (606) to perform an operation of obtaining the second predicted intent until the initial LLM outputs termination indication information; and

determining (607) the first predicted intent and the second predicted intent sequentially output by the initial LLM as a second intent sequence, wherein the second intent sequence is the target predicted intent.

11. The method of claim 10, wherein obtaining (504) the fine-tuned LLM by fine-tuning the initial LLM based on the difference between the target predicted intent and the intent label comprises:

calculating a first difference value between the i-th intent in the first intent sequence and the i-th predicted intent in the second intent sequence;

determining a target difference value based on first difference values corresponding to each intent in the first intent sequence; and

obtaining the fine-tuned LLM by fine-tuning the initial LLM based on the target difference value.

12. An apparatus (700) for intent recognition based on a large language model, LLM, configured to execute the method of any one of claims 1-7.

13. An apparatus (800) for fine-tuning based on a large language model, LLM, configured to execute the method of any one of claims 8-11.

14. A non-transitory computer readable storage medium storing computer instructions, wherein the computer instructions are configured to cause a computer to implement the method of any one of claims 1 to 7 or the method of any one of claims 8 to 11.

15. A computer program product comprising computer instructions, wherein when the computer instructions are executed by a processor, steps of the method of any one of claims 1 to 7 or the method of any one of claims 8 to 11 are implemented.

obtaining a query statement, a preset intention, and descriptive information of the preset intention — 101

↓

obtaining a first candidate intention corresponding to the query statement by matching the query statement with the preset intention and the descriptive information of the preset intention — 102

↓

generating first prompt information based on the query statement, the first candidate intention, and descriptive information of the first candidate intention — 103

↓

determining a first target intention corresponding to the query statement from the first candidate intention by inputting the first prompt information into the LLM — 104

FIG. 1

obtaining a query statement, a preset intention, and descriptive information of the preset intention — 201

↓

obtaining a first candidate intention corresponding to the query statement by matching the query statement with the preset intention and the descriptive information of the preset intention — 202

↓

obtaining a user identifier of the query statement — 203

↓

determining historical interaction information corresponding to the query statement based on the user identifier — 204

↓

generating first prompt information based on the query statement, the first candidate intention, the descriptive information of the first candidate intention, and the historical interaction information — 205

↓

determining a first target intention corresponding to the query statement from the first candidate intention by inputting the first prompt information into an LLM — 206

FIG. 2

determining a first target intention corresponding to the query statement from first candidate intentions by inputting the first prompt information into the LLM ⌐ 301

↓

generating second prompt information based on the first intention and the first prompt information ⌐ 302

↓

determining a second intention corresponding to the query statement from another first candidate intention except for the first intention by inputting the second prompt information into the LLM ⌐ 303

↓

generating new second prompt information based on the second intention and the second prompt information, and returning to perform an operation of obtaining the second intention until the LLM outputs termination indication information ⌐ 304

↓

determining the first intention and the second intention as the first target intention ⌐ 305

FIG. 3

obtaining a query statement, a preset intention, and descriptive information of the preset intention ⌐ 401

↓

obtaining a first candidate intention corresponding to the query statement by matching the query statement with the preset intention and the descriptive information of the preset intention ⌐ 402

↓

in response to the descriptive information comprising a parameter type corresponding to the preset intention and definition information corresponding to the parameter type, generating third prompt information based on the query statement, the first candidate intention, and the descriptive information corresponding to the first candidate intention ⌐ 403

↓

obtaining the first target intention corresponding to the query statement and the target parameter associated with the first target intention in the query statement by inputting the third prompt information into the LLM ⌐ 404

↓

determining a response statement corresponding to the query statement based on the first target intention and the target parameter ⌐ 405

FIG. 4

obtaining a sample dataset, wherein the sample dataset comprises a sample statement, a third candidate intention corresponding to the sample statement, descriptive information corresponding to the third candidate intention, and an intention label corresponding to the sample statement ⌐ 501

generating fourth prompt information based on the sample statement, the third candidate intention, and the descriptive information corresponding to the third candidate intention ⌐ 502

obtaining a target predicted intention corresponding to the sample statement by inputting the fourth prompt information into an initial LLM ⌐ 503

obtaining a fine-tuned LLM by fine-tuning the initial LLM based on a difference between the target predicted intention and the intention label ⌐ 504

FIG. 5

obtaining a sample dataset, wherein the sample dataset comprises a sample statement, a third candidate intention corresponding to the sample statement, descriptive information corresponding to the third candidate intention, and an intention label corresponding to the sample statement ⟋ 601

generating fourth prompt information based on the sample statement, the third candidate intention, and the descriptive information corresponding to the third candidate intention ⟋ 602

in response to the intention label being a first intention sequence, obtaining a first predicted intention corresponding to the sample statement from the third candidate intention by inputting the fourth prompt information into the initial LLM ⟋ 603

generating fifth prompt information based on the first predicted intention and the fourth prompt information ⟋ 604

determining a second predicted intention corresponding to the sample statement from another third candidate intention except for the first predicted intention by inputting the fifth prompt information into the initial LLM ⟋ 605

generating new fifth prompt information based on the second predicted intention and the fifth prompt information, and returning to perform an operation of obtaining the second predicted intention until the initial LLM outputs termination indication information ⟋ 606

determining the first predicted intention and the second predicted intention sequentially output by the initial LLM as a second intention sequence, wherein the second intention sequence is the target predicted intention ⟋ 607

determining a first difference value between an i-th intention in the first intention sequence and an i-th predicted intention in the second intention sequence ⟋ 608

determining a target difference value based on first difference values corresponding to each intention in the first intention sequence ⟋ 609

obtaining the fine-tuned LLM by fine-tuning the initial LLM based on the target difference value ⟋ 610

FIG. 6

700

apparatus for intent recognition
based on an LLM

obtaining module — 701

matching module — 702

generating module — 703

recognizing module — 704

FIG. 7

800

apparatus for fine-tuning
based on an LLM

obtaining module — 801

generating module — 802

predicting module — 803

fine-tuning module — 804

FIG. 8

900

901 computing unit

902 ROM

903 RAM

904

905 I/O interface

906 input unit

907 output unit

908 storage unit

909 communication unit

FIG. 9

## EUROPEAN SEARCH REPORT

**Application Number**

EP 25 18 2925

### DOCUMENTS CONSIDERED TO BE RELEVANT

| Category | Citation of document with indication, where appropriate, of relevant passages | Relevant to claim |
|---|---|---|
| X | CN 117 932 013 A (BAIDU INTELLIGENT CLOUD CHENGDU TECH CO LTD) 26 April 2024 (2024-04-26) * machine translation; paragraphs [0117], [0119]; claims 1,2; figure 2 * ----- | 1-15 |

**CLASSIFICATION OF THE APPLICATION (IPC)**

INV.
G06F16/2458
G06F16/3329

**TECHNICAL FIELDS SEARCHED (IPC)**

G06F

The present search report has been drawn up for all claims

| Place of search | Date of completion of the search | Examiner |
|---|---|---|
| The Hague | 9 October 2025 | Hackelbusch, Richard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 25 18 2925

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | | Publication date | Patent family member(s) | | Publication date |
|---|---|---|---|---|---|
| CN 117932013 | A | 26-04-2024 | CN | 117932013 A | 26-04-2024 |
| | | | WO | 2025123631 A1 | 19-06-2025 |

EPO FORM P0459

For more details about this annex : see Official Journal of the European Patent Office, No. 12/82